# FASCICULE DE BREVET EUROPEEN

(11) **EP 1 876 576 B1**
(45) Date de publication et mention de la délivrance du brevet: **07.04.2010**
(21) Numéro de dépôt: 06116743.3
(22) Date de dépôt: 06.07.2006
(51) Int. Cl.: G09B 29/10, G01C 21/00

(54) **Méthode et dispositif de repérage de position**
Verfahren und Vorrichtung zur Positionsortung
Method and device for position finding

(43) Date de publication de la demande: 09.01.2008
(73) Titulaire: Géomatic Ingénierie S.A., 1066 Epalinges (CH)
(72) Inventeur: Pilet, Thierry, 1867, Ollon (CH); Ladetto, Quentin, 1004, Lausanne (CH); Dias, Julia, 1135, Denens (CH)
(74) Mandataire: Cornut, Isabelle

(56) Documents cités:
- JP-A- 2001 228 231
- US-A1- 2003 078 725
- US-B1- 6 198 431
- US-B1- 6 222 482

## Description

### DOMAINE TECHNIQUE

La présente invention concerne un procédé et un dispositif de repérage géographique instantané de position sur une cartographie illustrative.

### TECHNIQUE ANTERIEURE

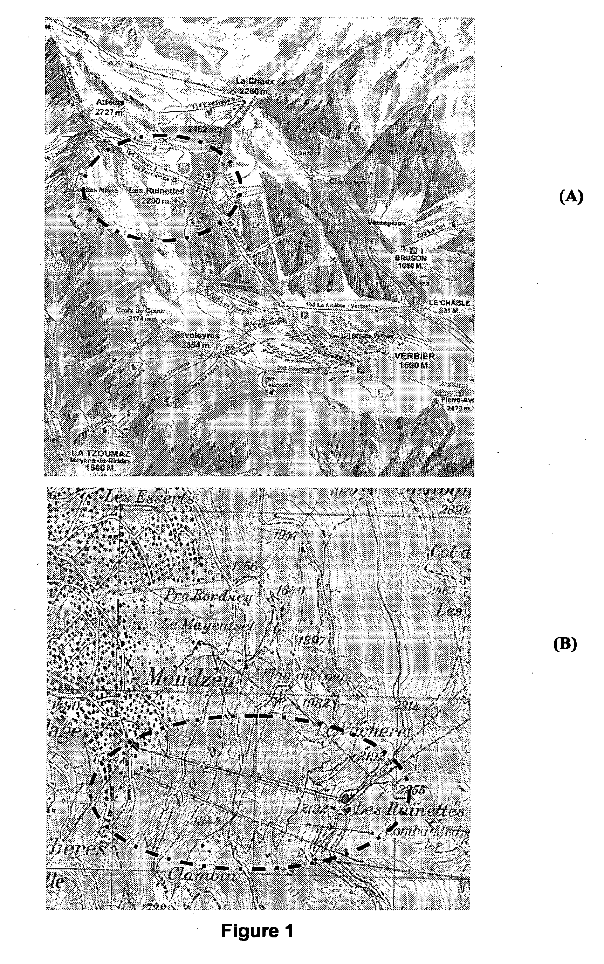

Les cartes illustratives sont couramment utilisées comme moyen simple de repérage. Si les cartes illustratives permettent de visualiser de manière simple et rapide l'ensemble d'une zone géographique, elles présentent cependant le désavantage de fournir certaines données délibérément erronées ou omises afin d'en faciliter la lecture. Les cartes illustratives sont très couramment utilisées dans le domaine des activités de plein-air comme par exemple le ski, le golf, la randonnée, les courses et les rallyes ou comme moyen de repérage dans certains parcs (par exemple des parcs d'attraction ou des parcs forestiers ou des réserves naturelles), des expositions ou des villes (Figure 1A). Ces cartes sont très pratiques car elles permettent instantanément de comprendre l'essentiel des éléments intéressants pour l'utilisateur et contiennent des informations «ciblées» en fonction de leur utilisation, comme le tracé des pistes de ski, de parcours de golf, des chemins et stands par exemple. Cependant, les cartes illustratives ne permettent pas une lecture détaillée et précise, notamment pour le repérage d'une position exacte. Dans ce cas, une carte topographique est indispensable.

Les cartes topographiques sont précises et permettent un repérage géographique exact (Figure 1B). Grâce à des signaux émis par des satellites, un récepteur peut calculer sa propre position (comme par exemple un récepteur GPS : Global Positioning System) exprimée en général par deux coordonnées : la longitude et la latitude. Cette position peut être facilement représentée sur une carte topographique, le type de projection étant connu. En revanche, un tel positionnement précis est impossible sur une carte illustrative en raison des déformations de surfaces, de distances et d'angles très variables selon les parties de la carte illustrative.

Les cartes topographiques présentent la limitation d'être complexes, de ne pas permettre une lecture très rapide et de ne pas représenter forcément toutes les informations géographiques utiles à leur utilisation spécifique comme le font les cartes illustratives. Les cartes illustratives en retour ne permettent pas un positionnement précis. En outre, la connaissance de la position exacte de certains éléments géographiques d'intérêt (représentés sur des cartes illustratives) sur une carte topographique est parfois souhaitable, par exemple afin de connaître la distance entre cet élément géographique d'intérêt et la position de l'utilisateur en temps donné.

Une méthode de positionnement de coordonnées GPS sur des représentations à l'échelle comme des images ou cartes illustrées (cartes à projection tridimensionnelle, «orthophotos») a été développée pour les activités de plein air (US 6,198,431). Cette méthode permet de tenir compte de la coordonnée « altitude » d'un point et de représenter le déplacement de ce point sur une carte à projection tridimensionnelle à l'échelle, où le relief est rehaussé par la génération de données d'altitude virtuelles. Cette méthode a été développée pour la génération a posteriori d'images ou de cartes à projection tridimensionnelle à l'échelle représentant la trajectoire de l'utilisateur porteur du récepteur GPS ainsi que sa vitesse locale. Cependant, cette méthode ne permet pas un positionnement des coordonnées topographiques sur une carte illustrative qui n'est pas à l'échelle, ni l'inverse.

D'autres méthodes de positionnement sont décrites dans les documents US 6,222,482 et JP 2001-228231.

Ainsi, il est souhaitable de développer une méthode qui permette à la fois de bénéficier des informations fournies par les deux systèmes cartographiques et ceci de préférence en temps réel. En outre, il est également souhaitable de développer une méthode de repérage précis d'une carte illustrative à une autre présentant des déformations différentes.

### EXPOSE DE L'INVENTION

La présente invention se propose de surmonter le problème non résolu de repérage instantané de position en temps réel d'une position topographique vers une carte illustrative et vice-versa ou entre deux cartes illustratives.

Le but de l'invention est atteint par un procédé de repérage géographique précis sur une carte illustrative caractérisé en ce qu'il comprend les étapes suivantes :
(1) Prétraitement des données géographiques de référence comprenant les étapes suivantes:
   (a) Sélection d'une carte origine et d'une carte destination de la zone géographique d'intérêt ;
   (b) Sélection de points de repères communs à la dite carte origine et à la dite carte destination;
   (c) Génération d'un « maillage » sur la carte origine par génération de polygones qui ne se chevauchent pas et dont les sommets correspondent à des points de repères sélectionnés en (b) et détermination des coordonnées de chaque polygone dans le système de coordonnées de la carte origine;
   (d) Report sur la carte destination du « maillage » généré en (c) par report sur la carte destination des polygones, en utilisant les mêmes points de repères comme sommets des polygones et détermination des coordonnées de chaque polygone dans le système de coordonnées de la carte destination;
   (e) Mémorisation de chaque polygone généré dans le système de coordonnées de la carte origine ainsi que de son polygone correspondant dans le système de coordonnées de la carte destination;
(2) Transformation des coordonnées d'une position de la carte origine dans les coordonnées de la carte destination comprenant les étapes suivantes:
   (f) Détermination d'une position sur la carte origine sélectionnée en (a);
   (g) Détermination du polygone de la carte origine dans lequel se trouve la dite position sélectionnée en (f) parmi les polygones générés en (c) et détermination des distances relatives entre la position sélectionnée et les sommets de ce polygone ;
   (h) Détermination sur la carte destination, du polygone correspondant au polygone déterminé en (g) ;
   (i) Détermination par interpolation des coordonnées de la position sélectionnée en (f) dans le système de coordonnées de la carte destination sur la base des distances relatives déterminées en (g) et les sommets du polygone déterminé en (h);
   étant entendu que la carte origine et la carte destination sont sélectionnées entre une carte illustrative et une carte topographique et que lorsque la carte origine est une carte illustrative, la carte destination est une carte topographique et vice versa.

La solution au problème est également atteinte par un dispositif de repérage géographique comprenant :
- une unité centrale;
- un système de géolocalisation définissant une position topographique;
- un élément de mémoire permettant de contenir une carte illustrative d'une zone géographique;
- des moyens d'affichage ;
   caractérisé en ce que, ce dispositif comprend:
- un élément de mémoire permettant de contenir une base de données contenant un ensemble de paires de polygones, associant chaque polygone origine à un polygone destination de sorte que les mêmes points de repères formant les sommets des polygones origine forment les sommets des polygones destination correspondants, étant entendu que la carte origine et la carte destination sont sélectionnées entre une carte illustrative et une carte topographique et que lorsque la carte origine est une carte illustrative, la carte destination est une carte topographique et vice versa,
- des moyens de déterminer une position dans la carte origine,
- des moyens pour déterminer le polygone origine contenant la position dans la carte origine,
- des moyens de transformation pour déterminer le polygone destination correspondant,
- des moyens pour déterminer la position à l'intérieur du polygone destination par détermination des distances relatives entre la position dans la carte origine et les sommets du polygone origine.

La solution au problème est également atteinte par l'utilisation d'un dispositif de l'invention dans un procédé de repérage géographique.

Le dispositif et les méthodes selon l'invention permettent de déterminer et de faire figurer la position topographique connue d'un objet ou d'un individu sur une carte illustrative, de manière exacte et en temps réel. Le dispositif et les méthodes permettent également de déterminer de manière précise et en temps réel la position topographique d'un élément d'intérêt figurant sur une carte illustrative. Le dispositif et les méthodes permettent également de déterminer de manière précise et en temps réel la position d'un élément d'intérêt figurant sur une carte illustrative, sur une autre carte illustrative.

### DESCRIPTION SOMMAIRE DES DESSINS

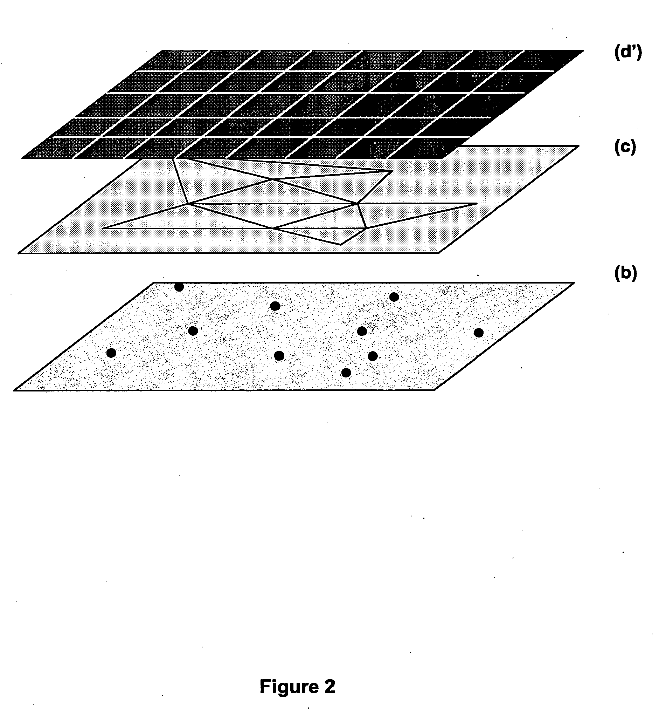

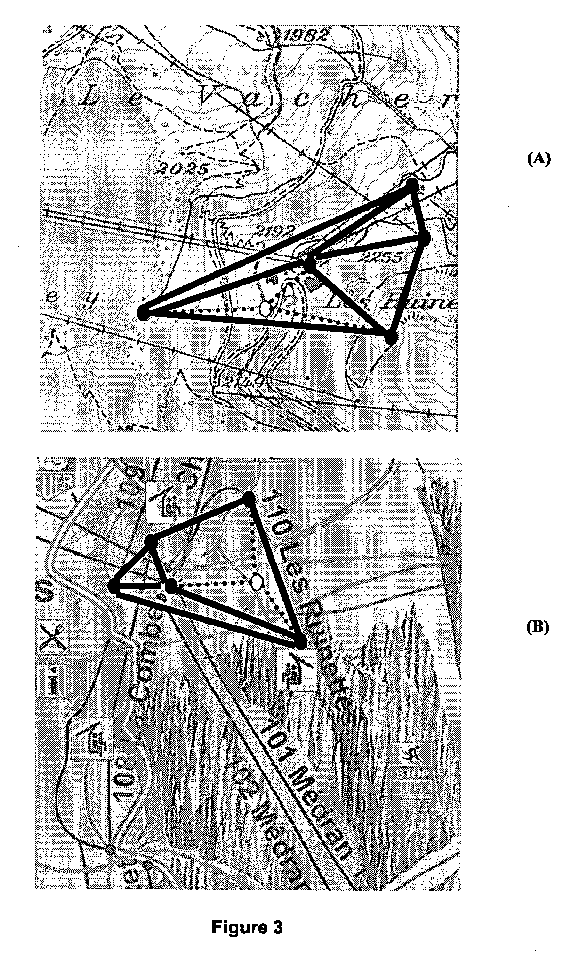

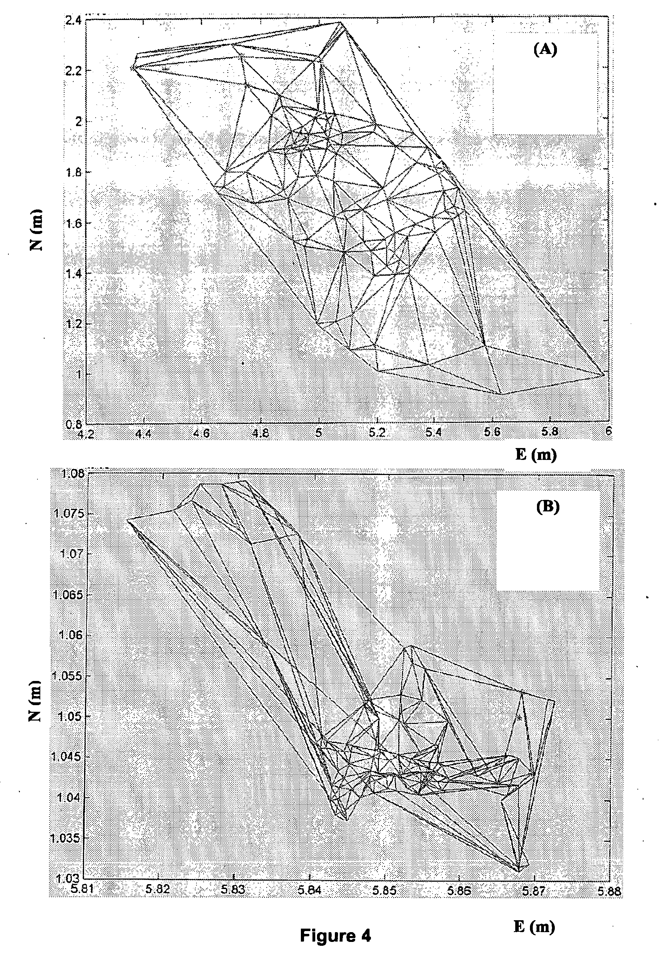

La présente invention et ses avantages seront mieux compris en référence aux figures annexées et à la description détaillée d'un mode de réalisation particulier, dans lesquelles :
- **La** **figure 1** illustre un exemple de deux types de cartes illustrative (Figure 1A) et topographique (Figure 1B) d'une zone géographique commune et sur lesquelles la méthode de l'invention peut être appliquée pour effectuer un repérage précis.
- **La** **figure 2** illustre les étapes (b), (c) et (d') du procédé de l'invention sur la carte topographique.
- **La** **figure 3** illustre une schématisation d'un exemple de maillage sur la carte topographique (Figure 3A) et son report sur la carte illustrative (Figure 3B). Les repères communs sélectionnés entre les deux cartes sont matérialisés par des points noirs, la position de la carte topographique à matérialiser sur la carte illustrative est représentée par un rond blanc.
- **La** **figure 4** illustre les détails d'un exemple de maillage sur la carte topographique (Figure 4A) et son report sur la carte illustrative (Figure 4B). E et N expriment respectivement les coordonnées Est et Nord en 10⁵ mètres.

### MANIERES DE REALISER L'INVENTION

La présente invention sera mieux comprise en référence aux définitions suivantes:

Par « carte topographique », on entend une carte ayant principalement pour objet de représenter à l'échelle une information sur la surface terrestre, illustrant notamment la végétation, l'hydrographie ainsi que des entités anthropiques telles que routes, chemins de fer, lieux habités et bâtiments. Une carte topographique peut optionnellement représenter le relief (la hauteur du terrain), la surface du sol et les accidents topographiques qui le composent, qu'il s'agisse d'entités naturelles ou artificielles. Dans le cadre de l'invention, il est entendu que l'expression « carte topographique » englobe également un ensemble de positions topographiques d'éléments de référence sur le terrain et ne se borne pas à une cartographie classique. Par conséquent, l'expression « carte topographique » englobe par exemple l'ensemble des positions topographiques d'éléments de référence obtenu par relevé GPS sur le terrain.

Par "carte illustrative", on entend une carte à visée simple de repérage où figurent de manière schématique les éléments géographiques (cours d'eau, forêt, lac) ou physiques principaux (ponts, routes, édifices, pistes ou chemins, lieux publics, commerces) facilement repérables sur le terrain. Une carte illustrative n'est pas à l'échelle et se caractérise par le fait qu'elle contient certaines données délibérément erronées ou omises afin d'en faciliter la lecture. Par exemple, une carte illustrative peut être « étirée » dans une direction dans le cas de présence de relief ou dans le cas de zones où les éléments d'intérêt sont plus nombreux, pour faciliter la lecture des éléments d'intérêt (par exemple, installations de ski, refuges, points de ravitaillement, chemin de randonnées, pistes cyclables, stands, installations de golf, aménagement forestiers, installations urbaines principales). En outre, les cartes illustratives sont souvent une représentation en perspective ou tri-dimensionnelle et non une vue de dessus, ce qui déforme également les distances. En général, les cartes illustratives sont ciblées en fonction de leur usage, c'est-à-dire que figurent sur une carte illustrative essentiellement les éléments d'intérêt pour l'utilisateur, ainsi, un même lieu géographique peut donner lieux à des représentations multiples sous forme de cartes illustratives, selon l'utilisation visée par l'utilisateur de la carte.

Par « maillage » on entend la génération de polygones ayant pour sommets des points de référence communs à la carte origine et à la carte destination. Selon un aspect particulier de l'invention, le maillage est effectué par triangulation, c'est-à-dire que les polygones sont des triangles. La génération des triangles s'effectue de préférence selon une triangulation de Delaunay. Le principe de la triangulation de Delaunay est connu et largement décrit ("Triangulation de Delaunay et maillage, application aux éléments finis", GORGES et BOROUCHAKI, Éditions Hermès, Shewchuk, « Delaunay Refinement Algorithms for Triangular Mesh Generation, Computational Geometry: Theory and Applications » 22(1-3):21-74, May 2002). Pour réaliser ce calcul de triangulation, un algorithme de triangulation de librairie Computational Geometry Algorithms Library (CGAL) peut par exemple être utilisé.

On note que les triangles résultant de la triangulation ne se superposent pas sur la carte origine. La triangulation dans le contexte de l'invention est effectuée sur la carte origine à partir de points de repères communs à la carte origine et à la carte destination. Ce maillage est ensuite reporté sur la carte destination en utilisant les mêmes points de repère et les mêmes triangles. Il est important de préciser que dans le cadre de l'invention, la triangulation se fait toujours entre les positions de repère de la carte origine et que le report des triangles se fait sur la carte destination. On note que lors du report sur la carte destination des triangles formés sur la carte origine, certains des triangles peuvent se superposer, aussi la triangulation doit être effectuée dans le même sens que dans lequel le repérage doit être effectué, c'est-à-dire que les cartes origine et destination sont les mêmes pour l'étape (1) et l'étape (2).

Selon un aspect préféré de l'invention, afin d'optimiser l'étape du procédé de l'invention comprenant la détermination du polygone, en particulier du triangle, de la carte origine dans lequel se trouve la dite position déterminée en (f), parmi les polygones, en particulier les triangles, généré en (c), une étape supplémentaire (d') de génération d'une grille à maille régulière peut être optionnellement effectuée dans le procédé de l'invention, préalablement à l'étape (2). Dans ce cas, une grille à maille régulière est rajoutée sur le maillage initial formé par les polygones, en particulier des triangles, sur la carte origine. Une association de données où chaque maille de la grille est associée aux polygones (triangles) qui sont contenus ou interceptent cette maille est alors crée.
Ces données sont stockées et peuvent faire l'objet d'une base de données. Elles peuvent être associées aux données combinant chaque polygone (triangle) aux coordonnées de ses sommets dans le système de coordonnées dans sa carte d'appartenance.

L'association de données générée à l'étape (d') permet d'identifier la ou les maille(s) de la grille la (les) plus proche(s) du point à repérer et ensuite de raccourcir le temps d'identification du polygone (et en particulier du triangle) contenant ce point à repérer, optimisant ainsi les temps nécessaires aux étapes (g) à (i) du procédé de l'invention.

Dans un aspect optionnel de l'invention, un « maillage » 3-D est possible par une triangulation en trois dimensions, en tenant compte de l'altitude mais il augmente la complexité des calculs sans améliorer la précision du procédé de repérage de l'invention. Dans ce cas, la triangulation tridimensionnelle se fera par la génération de tétraèdres et de sphères, à la place de triangles.
L'idéal est de réaliser un maillage sur un nombre important de points de repère afin de générer des triangles très petits afin d'augmenter la précision du maillage. Cependant, le temps de calcul est augmenté par la présence d'un grand nombre de points de repère donc un bon équilibre doit être choisi entre la précision et le temps de calcul pour le choix du nombre de points de référence pour effectuer le maillage. Typiquement, si la précision du système de géolocalisation est de 20 m, il est contre performant en matière de temps et de complexité de calcul d'espacer les points de repère de moins de 20 m, voire même de moins de 40 m.

Selon un aspect préféré de l'invention, les points de repère les plus nombreux sont sélectionnés dans les parties de l'illustration où les surfaces sont les plus déformées et les moins nombreux où la surface est peu déformée. Un exemple de maillage sur la carte topographique et son report sur la carte illustrative est donné à la Figure 2 : étape (b) : sélection de points facilement repérables dans les deux types de carte (topographique et illustrative) ; étape (c) : génération du maillage par triangulation ; étape (d') : génération d'une grille à maille régulière sur le maillage triangulaire; repérage des triangles dans la grille à maille régulière puis enregistrement des couples de données: triangles qui sont contenus dans ou interceptent chaque maille régulière ; coordonnées des sommets des triangles dans le système de coordonnées dans sa carte d'appartenance.

Les résultats du maillage c'est-à-dire les coordonnées des polygones et en particulier des triangles dans le système de chacune des cartes et les associations des coordonnées décrites ci-dessus dans le cas de génération d'une grille à maille régulière sont stockés sous forme de coordonnées, par exemple dans un élément de mémoire sur tous types de support comme par exemple un DVD, CD-Rom, disque dur.

Par « système de géolocalisation», on entend un système permettant la localisation d'un objet sur une carte à l'aide de positions topographiques, comme par exemple la géolocalisation par système de positionnement par satellite ou par téléphonie portable (WO 2006021570).

Par « système de positionnement par satellite », on entend un moyen de repérer précisément la position dans l'espace d'un récepteur, et en particulier à la surface du globe, en mesurant la distance séparant la position du récepteur des dits satellites, le récepteur captant les signaux d'au moins trois satellites dont les positions sont connues. Le principal système de positionnement par satellite est le « Global Positioning System » (GPS), soit en français système mondial de positionnement. D'autres systèmes de positionnement par satellite sont connus comme le GPS différentiel (DGPS) qui permet d'améliorer la précision du GPS en réduisant la marge d'erreur par enregistrement des fluctuations de mesure et une correction appropriée. D'autres systèmes connus de positionnement par satellite sont le système Glonass, le système Beidou et le système Galileo récemment développé.

Par « carte origine », on entend la carte sur laquelle on sélectionne une position d'un point P, position dont on veut obtenir les coordonnées et/ou la représentation sur la carte destination. La carte origine est soit une carte illustrative, soit une carte topographique.

Lorsque la carte origine est une carte topographique, le procédé et le dispositif de l'invention permettent de convertir les coordonnées d'un point P données par un système de géolocalisation dans le système de coordonnées d'une carte illustrative (carte destination) et/ou d'en obtenir la représentation sur la carte illustrative.

Lorsque la carte « origine » est une carte illustrative, le procédé et le dispositif de l'invention permettent de déterminer la position topographique exacte d'un point P d'intérêt particulier matérialisé sur la carte illustrative (par exemple des éléments d'intérêt comme un point de ravitaillement, un départ de télécabine, une arrivée, un point de secours etc...) et/ou d'en obtenir la position précise à l'échelle sur la carte topographique. Dans ce cas, la méthode et le dispositif de l'invention permettent par exemple d'évaluer de surcroît la distance précise de la position actuelle de l'utilisateur par rapport à cette position P d'intérêt particulier matérialisé de manière imprécise sur la carte illustrative.

Par « carte destination », on entend la carte pour laquelle on obtient les coordonnées et/ou on représente la position P sélectionnée sur une carte origine. Les cartes destination sont sélectionnées parmi les cartes illustratives et topographiques.

Par « polygones origine » on entend les polygones formés sur la carte origine à l'issue du maillage.

Par « polygones destination » on entend les polygones formés sur la carte destination à l'issue du report du maillage.

Par « MMS », on entend un mode de transmission en différé de divers types de contenu multimédia tels que des images, des extraits audio et des séquences vidéo.

Par « SMS », on entend un mode de transmission de messages texte ou numérique allant jusqu'à 160 caractères alphanumériques.

Par GPRS, on entend un mode de communication sans fil qui permet d'atteindre des débits de 115 kbits/s.

Par « centre de traitement », on entend l'endroit où au moins les étapes de (g) à (i) du procédé de l'invention sont effectuées.

L'unité centrale selon l'invention est associée à des moyens de calcul.

La sélection de points de repères communs dans le procédé de l'invention est réalisée de manière à effectuer un maillage d'une précision suffisante (basée sur un nombre de points de repère suffisants) autour de la zone où l'on veut repérer de manière précise une position P sélectionnée dans une carte origine, sur une carte destination. Par exemple, dans le cas de l'application du procédé et du dispositif au repérage sur une station de ski, il est souhaitable d'entourer les zones correspondant aux points de départ et d'arrivée des télécabines ainsi que les pistes de skis avec suffisamment de points de repères.

La méthode de recherche du triangle contenant la position P est basée sur une comparaison de surfaces de triangles. Cette méthode est basée sur le calcul des surfaces partielles des triangles formés entre la position P et les deux sommets d'un triangle du maillage, proche de la position P. Ces surfaces partielles, dans le cas d'un triangle aux sommets T1, T2, T3 sont représentées par S1 (P, T2, T3), S2 (T1, P, T3) et S3 (T1, T2, P). Si la somme des trois surfaces partielles est supérieure à celle de la surface du triangle S (T1, T2, T3), la position P se trouve à l'extérieur de ce triangle. Ce calcul est réitéré jusqu'à ce que le triangle dans lequel la position P se trouve soit identifié. Dans le cas où la position P se trouve sur un côté ou sur un sommet commun à plusieurs triangles, les triangles correspondants sont identifiés et un triangle est choisi.

Une fois le triangle contenant la position P et ses coordonnées déterminés dans la carte origine, le triangle correspondant et ses coordonnées dans la carte destination sont déterminés. Ensuite, les facteurs de la combinaison tri-linéaire permettant d'écrire les coordonnées de la position P dans la carte origine en fonction de la position des trois sommets du triangle identifié sont calculés (interpolation tri-linéaire). Ces mêmes facteurs sont utilisés pour calculer la position des coordonnées de la position P' correspondant à la position P dans la carte destination, d'après les positions des trois même sommets du triangle dans la carte destination.

Dans le cas où la carte origine est une carte topographique, la position P (X, Y) est donnée par un système de géolocalisation comme par exemple un système de localisation par satellite comme le GPS, l'étape (f) du procédé comprend une détermination de la position par un système de localisation par satellite comme par exemple la position GPS de l'utilisateur et les étapes de (f) à (i) selon procédé de l'invention se décomposent en la séquence d'étapes suivante : **(f)** détermination des coordonnées GPS de la position P d'intérêt; **(g)** détermination du polygone, en particulier du triangle, de la carte origine dans lequel se trouve la dite position sélectionnée en (f) parmi les polygones (triangles) générés en (c) et détermination des distances relatives entre la position sélectionnée en (f) et les sommets de ce polygone, à partir des résultats du maillage c'est-à-dire des coordonnées des polygones, en particulier des triangles, et optionnellement à partir des associations entre les polygones et la maille régulière, dans le cas de génération d'une grille à maille régulière; (h) détermination sur la carte destination, du polygone, en particulier du triangle correspondant au polygone (triangle) déterminé en (g); (i) détermination par interpolation des coordonnées de la position sélectionnée en (f) dans le système de coordonnées de la carte destination, sur la base des distances relatives déterminées en (g) et les sommets du polygone déterminé en (h) ; L'étape (i) peut être suivie d'une étape de matérialisation graphique de la position P sur la carte illustrative, comme par exemple l'affichage de ses coordonnées et/ou sa matérialisation à l'aide d'un symbole.

Dans le cas où la carte origine est une carte illustrative, la position P est donnée par ses coordonnées graphiques sur la carte illustrative, l'étape (f) comprend la détermination du pixel où se trouve la position P et de ses coordonnées (X,Y). Les étapes de (f) à (i) selon procédé de l'invention se décomposent en la séquence d'étapes suivante : **(f)** détermination des coordonnées de la position P d'intérêt à partir du pixel correspondant à la position P; **(g)** détermination du polygone, en particulier du triangle, de la carte origine dans lequel se trouve la dite position sélectionnée en (f) parmi les polygones (triangles) générés en (c) et détermination des distances relatives entre la position sélectionnée et les sommets de ce polygone, à partir des résultats du maillage c'est-à-dire des coordonnées des polygones, en particulier des triangles, optionnellement à partir des associations entre les polygones et la maille régulière, dans le cas de génération d'une grille à maille régulière; (h) détermination sur la carte destination, du polygone, en particulier du triangle, correspondant au polygone (triangle) déterminé en (g); (i) détermination par interpolation des coordonnées de la position sélectionnée en (f) dans le système de coordonnées de la carte destination, sur la base des distances relatives déterminées en (g) et les sommets du polygone déterminé en (h) ; L'étape (i) peut être suivie d'une étape de matérialisation graphique de la position P sur la carte topographique comme l'affichage de ses coordonnées GPS et/ou sa matérialisation à l'aide d'un symbole.

Selon un aspect particulier du procédé de l'invention, l'étape (b) se fait de sorte que les points les plus nombreux soient situés dans la zone d'intérêt.

Selon un aspect particulier du procédé de l'invention, la carte origine est une carte topographique.

Selon un autre aspect particulier du procédé de l'invention, la carte origine est une carte illustrative.

Selon un autre aspect particulier du procédé de l'invention, les polygones sont des triangles.

Selon un autre aspect particulier du procédé de l'invention, l'étape (c) de maillage se fait par triangulation comme par exemple une triangulation de Delaunay.

Selon un autre aspect particulier du procédé de l'invention, l'étape (2) est précédée par une étape supplémentaire (d') de génération d'une grille à maille régulière sur la carte origine.

Selon un aspect préféré du procédé de l'invention, une maille régulière est rajoutée sur le maillage initial formé par les polygones, en particulier des triangles, sur la carte origine et une base de données associant chaque maille de la grille aux polygones (triangles) qui interceptent ou sont contenus dans cette maille est crée. Cette base de données permet d'extraire les polygones pouvant contenir la position sélectionnée en (f). La détermination du polygone à l'étape (g) du procédé de l'invention s'effectue alors parmi le sous-ensemble des polygones pouvant contenir la position sélectionnée en (f) extraits de cette base de données.

Selon un autre aspect particulier du procédé de l'invention, la carte origine est une carte topographique et l'étape (f) comprend la détermination des coordonnées de la position par un système de positionnement par satellite de la position (par exemple, des coordonnées GPS). Par exemple, la position peut correspondre à la position GPS d'un utilisateur du procédé ou du dispositif.

Selon un autre aspect particulier du procédé de l'invention, la carte origine est une carte illustrative et l'étape (f) comprend la détermination de la position P (élément d'intérêt figurant sur la carte illustrative comme par exemple un édifice ou un endroit physiquement repérable sur le terrain), au moyen d'un système graphique permettant de déterminer le pixel correspondant à la position P et de ses coordonnées (X,Y).

Selon un autre aspect particulier du procédé de l'invention, l'étape (g) est réalisée à l'aide d'une méthode de triangulation.

Selon un autre aspect particulier du procédé de l'invention, l'étape (i) est réalisée à l'aide d'une méthode d'interpolation tri-linéaire.

Selon un autre aspect particulier du procédé de l'invention, l'étape (i) est suivie d'une étape ultérieure (j) de matérialisation de la position P sur la carte destination, typiquement par un moyen graphique comme par exemple par un symbole et/ou les coordonnées de la position P dans le système de coordonnées de la carte destination ou typiquement par un moyen électronique ou une impression.

Selon un autre aspect particulier du procédé de l'invention, l'(es) étape(s) (i) et/ou (j) est/sont réalisée(s) sur une carte topographique et est/sont complétée(s) par une étape ultérieure (k) de calcul de la distance entre la position déterminée en (i) sur la carte destination et la position topographique de l'utilisateur donnée par un système de positionnement par satellite.

Selon un autre aspect particulier du procédé de l'invention, l'étape (f) est réalisée sur une carte topographique et les étapes de (a) à (i) sont réalisées autant de fois que souhaité. Selon cet aspect particulier, le procédé de l'invention comporte de surcroît une étape d'affichage et/ou de stockage de toutes les positions sélectionnées successives sur la carte illustrative déterminées à l'étape (i), afin de matérialiser sur une carte illustrative par exemple le chemin parcouru par un utilisateur local ou final après que le nombre souhaité de cycles formés par la succession des étapes de (a) à (i) ou (j) ait été réalisé. Cette application est particulièrement avantageuse dans le cas de randonnées, de courses de ski ou de rallyes où l'utilisateur veut conserver une trace de son périple à titre de souvenir ou pour échanger avec d'autres individus.

Selon un aspect particulier de l'invention, le procédé permet de passer du système de coordonnées d'une carte illustrative au système de coordonnées d'une autre carte illustrative différente, en appliquant le procédé de l'invention de manière récurrente de manière à générer un système de coordonnées topographiques communes. Ce type de repérage est impossible par les méthodes classiques étant donné que les cartes illustratives ne sont pas à l'échelle et que les deux cartes ne sont pas déformées de la même manière. Un exemple de repérage géographique précis d'un élément d'intérêt d'une carte illustrative 1 sur une carte illustrative 2 selon l'invention peut se décomposer de manière suivante : (1a) réalisation du procédé de l'invention où la carte origine est une carte illustrative 1 et la carte destination une carte topographique, à l'issue duquel les coordonnées topographiques d'une position d'intérêt choisie dans la carte illustrative 1 sont obtenues ; suivi de (2a) : réalisation du procédé de l'invention où la carte origine est une carte topographique et la carte destination est une carte illustrative 2, à l'issue duquel les coordonnées topographiques de la même position d'intérêt obtenues à la fin de l'étape (1a) sont obtenues dans le système de coordonnées de la carte illustrative 2.

Un autre exemple de repérage géographique précis de différents éléments d'intérêt provenant de cartes illustratives différentes peut se décomposer de manière suivante : (1a) réalisation du procédé de l'invention où la carte origine est une carte illustrative 1 et la carte destination une carte topographique, à l'issue duquel les coordonnées topographiques d'une position d'intérêt 1 choisie dans la carte illustrative 1 sont obtenues ; suivi de (2a) : réalisation du procédé de l'invention où la carte origine est une carte illustrative 2 et la carte destination est une carte topographique, à l'issue duquel les coordonnées topographiques d'une autre position d'intérêt 2 choisie dans la carte illustrative 2 sont obtenues. Les coordonnées topographiques de plusieurs points d'intérêt provenant de cartes illustratives différentes peuvent être ainsi combinées.

Selon un aspect particulier de l'invention, le procédé est réalisé de manière locale, c'est-à-dire que le procédé est entièrement réalisé par l'utilisateur sur le terrain.

Selon un autre aspect particulier de l'invention, le procédé est réalisé partiellement de manière centralisée, c'est-à-dire que la sélection de la position sur la carte origine de l'étape (f) est réalisée à distance par rapport à un centre de traitement par un utilisateur final et les autres étapes du procédé sont réalisées par un centre de traitement de repérage.

Par exemple, selon cet aspect particulier de l'invention, l'utilisateur final repère en temps réel sa position topographique exacte sur le terrain au moyen d'un système de positionnement par satellite (comme par exemple par un GPS) pour laquelle il souhaite un repérage précis sur une carte illustrative et en transmet les coordonnées au centre de traitement (par exemple par e-mail, MMS, SMS, GPRS). Optionnellement, les coordonnées topographiques de la position (f) sont transmises par l'utilisateur avec une carte illustrative ou avec un numéro de référence d'une carte illustrative de la zone géographique où il se trouve. Le centre de traitement est soit en mesure de se procurer les cartes topographiques et illustratives de la zone où se trouve l'utilisateur final ou les reçoit de l'utilisateur final (par exemple par e-mail, MMS, SMS, GPRS). Le centre de traitement procède alors selon le procédé de l'invention et après l'étape (i) envoie à l'utilisateur final l'information concernant la position exacte sur la carte illustrative de la position topographique initialement sélectionnée par l'utilisateur final. Le centre de traitement peut envoyer par exemple cette information sous forme de coordonnées dans le système de coordonnées de la carte illustrative si l'utilisateur est en possession de la carte illustrative ou bien sous la forme d'une carte illustrative où est matérialisé la position initialement sélectionnée par l'utilisateur final.

Selon un autre aspect particulier de l'invention, où le procédé est réalisé de manière centralisée, l'utilisateur final repère un élément particulier d'une carte illustrative qui ne figure pas sur une carte topographique (par exemple par le nom de cet élément, par un numéro de référence sur une carte illustrative existante). L'utilisateur transmet cette information au centre de traitement (par exemple par e-mail, MMS, SMS, GPRS). Optionnellement, les informations concernant la position de la carte illustrative sélectionnée en (f) sont transmises par l'utilisateur avec la carte illustrative correspondante ou avec un numéro de référence de cette carte. Le centre de traitement est soit en mesure de se procurer les cartes topographiques et illustratives de la zone où se trouve l'élément choisit ou les reçoit de l'utilisateur final (par exemple par e-mail, MMS, SMS, GPRS). Le centre de traitement procède alors selon le procédé de l'invention et après l'étape (i) envoie à l'utilisateur final l'information concernant la position exacte sur la carte topographique de l'élément initialement sélectionné par l'utilisateur final sur la carte illustrative. Le centre de traitement peut envoyer par exemple cette information sous forme de coordonnées dans le système de coordonnées de la carte topographique si l'utilisateur est en possession de la carte topographique ou bien sous la forme d'une carte topographique où est matérialisé la position initialement sélectionnée par l'utilisateur final. L'utilisateur est alors en mesure de comparer sa position topographique exacte en temps réel sur le terrain que lui donne un système de positionnement par satellite (comme par exemple un récepteur GPS) et la position topographique de l'élément de référence envoyée par l'unité centrale.

Selon un autre aspect particulier de l'invention, le procédé de l'invention peut être précédé par une étape de chargement de manière électronique d'au moins une carte topographique et d'au moins une carte illustrative de la zone géographique d'intérêt. Cette étape peut être réalisée soit par internet, soit par consultation de bases de données locales (stockées sur tous types de support comme DVD, CD-Rom, disque dur, etc...) ou accessibles à distance, comme par exemple par réception à distance de l'information par des moyens de communication connus.

Selon un aspect particulier de l'invention, le dispositif est caractérisé en ce que l'unité centrale est en communication avec au moins un élément de mémoire afin de stocker les différentes coordonnées.

Selon un aspect particulier de l'invention, le dispositif est caractérisé en ce que l'unité centrale est intégrée au dispositif lui-même.

Selon un aspect particulier de l'invention, le dispositif est caractérisé en ce que l'unité centrale est en communication avec le dispositif lui-même.

Selon un aspect particulier de l'invention, les moyens de géolocalisation du dispositif de l'invention sont un récepteur GPS.

Selon un aspect particulier de l'invention, les moyens de détermination de la position dans la carte origine du dispositif est un récepteur GPS et les moyens d'affichage du dispositif permettent d'afficher la position du récepteur GPS sur la carte illustrative.

Les moyens de géolocalisation du dispositif de l'invention permettent de générer une information sur la position de l'utilisateur dans différents systèmes de projection connus comme le système de projection longitude-latitude et le système de projection UTM (Universal Transverse Mercator).

L'élément de mémoire du dispositif de l'invention contient ou permet de stocker au moins une base de données contenant un ensemble de paires de polygones, l'un correspondant à une carte origine, l'autre correspondant à une carte destination, les sommets du polygone origine correspondant aux mêmes points de repères que les sommets du polygone destination, étant entendu que la carte origine et la carte destination sont sélectionnées entre une carte illustrative et une carte topographique et que lorsque la carte origine est une carte illustrative, la carte destination est une carte topographique et vice versa. Optionnellement, l'élément de mémoire contient ou permet de stocker également une base de données contenant une association de données où chaque maille d'une grille à maille régulière sur la carte origine est associée aux polygones (triangles) origine qui sont contenus ou interceptent cette maille.

L'élément de mémoire du dispositif de l'invention contient ou permet de contenir une carte illustrative d'une zone géographique sous forme numérique. L'élément de mémoire permet également de stocker les informations concernant les différentes coordonnées qui sont sélectionnées par l'utilisateur par les moyens de saisie et celles qui sont générées par le procédé de l'invention.

Les moyens de saisie du dispositif de l'invention peuvent comporter un clavier de touches alphanumériques mais il peut également s'agir de moyens associés à l'écran d'affichage de manière à avoir un écran dit tactile. Les moyens de saisie permettent à l'utilisateur du dispositif de l'invention d'indiquer la position P d'intérêt particulier de la carte origine pour lequel la conversion de coordonnées dans le système de coordonnées de la carte destination est souhaitée. Ces moyens de saisie permettent de déterminer les coordonnées du pixel correspondant à la position sélectionnée par l'utilisateur.

Les moyens d'affichage du dispositif de l'invention peuvent être un écran qui permet d'afficher des informations sous forme alphanumérique mais également des symboles et des détails d'une carte topographique et une carte illustrative. De façon connue, l'écran d'affichage permet d'afficher par exemple des pictogrammes et des symboles indiquant clairement une information de position comme par exemple les moyens d'affichage connus d'afficheurs GPS.

Selon un aspect particulier de l'invention, le dispositif comprend de surcroît des moyens de connexion internet.

Selon un aspect particulier de l'invention, le dispositif comprend de surcroît des moyens de connexion à au moins une base de donnée cartographique.

Selon un aspect particulier de l'invention, le dispositif comprend de surcroît des moyens de connexion à des moyens d'impression pour imprimer la matérialisation de la position d'un élément d'intérêt particulier sur une carte destination.

Selon un aspect particulier de l'invention, le dispositif comprend de surcroît des moyens de transmission d'information comme par exemple par e-mail et/ou SMS, et/ou MMS et/ou GPRS.

Selon un aspect particulier de l'invention, le dispositif comprend de surcroît des moyens de connexion à un ordinateur ou une unité de calcul.

Selon un aspect particulier de l'invention, le dispositif comprend de surcroît un boîtier dans lequel se trouve au moins certains de ces éléments.

Selon un autre aspect de l'invention, le dispositif de l'invention est un élément électronique comme un ordinateur, de préférence portable comme un laptop, un organiseur, un agenda électronique, un assistant digital personnel (PDA) ou un téléphone portable. Le dispositif de l'invention peut également être intégré à un tableau de bord de véhicule.

Selon un aspect particulier, l'invention propose l'utilisation d'un dispositif de l'invention dans un procédé de repérage géographique.

L'invention s'applique à toutes les utilisations où un repérage instantané de position nécessitant la transformation de coordonnées exactes de position sur une cartographie topographique en coordonnées de cartographie illustrative et vice-versa est souhaité. Par exemple, l'invention s'applique à toutes les activités de plein air de loisirs ou d'utilité publique comme la randonnée pédestre ou par un quelconque moyen de transport (cheval, moto, vélo, voiture, traîneau etc..), les jeux-rallyes, les courses d'orientation ou de vitesse, le golf, le ski, les activités dans des parcs (parcs d'attraction, parcs d'expositions, les réserves naturelles, parcs forestiers) et les visites de sites (archéologiques, villes, vestiges). Le degré de portabilité du système sera adapté selon les besoins prescrits par l'activité correspondante.

Selon un autre aspect particulier de l'invention, le procédé et/ou le dispositif de l'invention peut être combiné avec un procédé et un dispositif décrit par US 6,198,431 afin par exemple de faire afficher la vitesse de déplacement en certains points de la carte illustrative de l'utilisateur local ou final.

Naturellement, d'autres modes de mise en oeuvre à la portée de l'homme de l'art, auraient pu être envisagés sans pour autant sortir du cadre de l'invention.

A titre d'illustration et sans aucun caractère limitatif, sont donnés les exemples ci-dessous de l'utilisation de la méthode et d'un dispositif selon l'invention.

### Abréviations :

Les abréviations suivantes réfèrent respectivement aux définitions ci-dessous:
**CD-Rom** (Compact disk read only memory), **DVD** (Digital Video Disk), **CGAL** (Computational Geometry Algorithms Library); **GPRS** (General Packet Radio Service), **GPS** (Global Positioning System), **MMS** (Multimedia Messaging Service), **PDA** (Personal Digital Assistant); **SMS** (Short Message Service ou service de messages courts).

### EXEMPLES

Le procédé et le dispositif de l'invention peuvent avantageusement être utilisés pour le repérage d'une position en montagne afin de reporter en temps réel la position topographique de l'utilisateur sur une carte illustrative.

Un aspect de l'invention est illustré à l'exemple 1 par le procédé de prétraitement des données géographiques de référence afin de générer une base de données utilisable (localement ou à distance) pour le repérage sur une carte illustrative. Un aspect complémentaire de l'invention est illustré à l'exemple 2 où un dispositif de l'invention est utilisé pour le repérage d'une position GPS en montagne sur une carte illustrative. Dans ce cas, le dispositif utilise la base de données générée préalablement à l'exemple 1.

### Exemple 1: Prétraitement des données géographiques de référence

Une carte illustrative (Figure 1A) et une carte topographique (Figure 1B) correspondant à la région des «Ruinettes» dans la station de ski de Verbier sont sélectionnées. Ces cartes sont stockées de manière électronique.

5 points de repères facilement identifiables sont choisis (ronds noirs) sur la carte topographique (Figure 3A) ainsi que leurs correspondants sur la carte illustrative (Figure 3B). Ces points de repères sont des départs ou arrivées de remontées mécaniques.
Une triangulation de Delaunay basée sur les 5 points de repère choisis est effectuée sur la carte topographique par triangulation (librairie CGAL ou Matlab®) et les triangles correspondants ayant pour sommets les mêmes points de repère choisis sont reportés sur la carte illustrative comme représenté schématiquement sur la Figure 2 et de manière détaillée sur la Figure 3. Les coordonnées de chacun des triangles sont calculées dans le système de coordonnées de leur carte respective. Les couples de coordonnées des triangles dans chacune des cartes sont stockés sous forme électronique sous un format donné u, v, w se référant aux numéros des sommets de chaque triangle. A chaque sommet correspondent ses coordonnées X, Y permettant de le repérer sur la carte. La Figure 4 représente le réseau triangulé pour un domaine couvert par 120 points, généralisant ainsi l'exemple de la Figure 3.

### Exemple 2 : Repérage d'une position GPS en montagne et indication de la position exacte sur une carte illustrative d'une station de ski

Le skieur ou randonneur se trouve dans la même région que celle représentée par les cartes de l'exemple 1. Le skieur ou randonneur est en possession du dispositif de l'invention contenant sur un des éléments de mémoire du dispositif, la base de données contenant les coordonnées de chaque triangle dans les systèmes de coordonnées respectifs de la carte topographique et de la carte illustrative générées à l'exemple 1. Le dispositif de l'invention du skieur ou randonneur contient également la carte illustrative mentionnée à l'exemple 1. Le skieur ou randonneur détermine sa position actuelle au moyen d'un récepteur GPS ou par sélection de la position directement à l'écran du dispositif de l'invention pour lesquelles il souhaite un repérage de manière précise sur la carte illustrative.

Le triangle sur la carte topographique dans lequel est contenu la position P est déterminé et les distances relatives de la position P dans la carte topographique et les sommets de ce triangle sont calculées par triangulation. Le triangle correspondant dans la carte illustrative est déterminé et les coordonnées de la position P dans la carte illustrative par rapport au dit triangle sont calculées par interpolation tri-linéaire.
La position sélectionnée du skieur ou randonneur est alors matérialisée de manière précise sur la carte illustrative (Figure 3B).

## Revendications

1. Procédé de repérage géographique précis sur une carte illustrative comprenant les étapes suivantes:
(1) Prétraitement des données géographiques de référence comprenant les étapes suivantes:
(a) Sélection d'une carte origine et d'une carte destination de la zone géographique d'intérêt ;
(b) Sélection de points de repères communs à la dite carte origine et à la dite carte destination;
(c) Génération d'un « maillage » sur la carte origine par génération de polygones qui ne se chevauchent pas et dont les sommets correspondent à des points de repères sélectionnés en (b) et détermination des coordonnées de chaque polygone dans le système de coordonnées de la carte origine;
(d) Report sur la carte destination du « maillage » généré en (c) par report sur la carte destination des polygones, en utilisant les mêmes points de repères comme sommets des polygones et détermination des coordonnées de chaque polygone dans le système de coordonnées de la carte destination;
(e) Mémorisation dans un élément de mémoire, de chaque polygone généré dans le système de coordonnées de la carte origine ainsi que de son polygone correspondant dans le système de coordonnées de la carte destination;
(2) Transformation des coordonnées d'une position de la carte origine dans les coordonnées de la carte destination comprenant les étapes suivantes:
(f) dans un dispositif de repérage, détermination d'une position sur la carte origine sélectionnée en (a);
(g) Détermination du polygone de la carte origine dans lequel se trouve la dite position sélectionnée en (f) parmi les polygones générés en (c) et détermination des distances relatives entre la position sélectionnée et les sommets de ce polygone.
(h) Détermination sur la carte destination, du polygone correspondant au polygone déterminé en (g) ;
(i) Détermination par interpolation des coordonnées de la position sélectionnée en (f) dans le système de coordonnées de la carte destination sur la base des distances relatives déterminées en (g) et les sommets du polygone déterminé en (h);
étant entendu que la carte origine et la carte destination sont sélectionnées entre une carte illustrative et une carte topographique et que lorsque la carte origine est une carte illustrative, la carte destination est une carte topographique et vice versa.

2. Procédé selon la revendication 1 où l'étape (b) se fait de sorte que les points les plus nombreux soient situés dans la zone d'intérêt.

3. Procédé selon une des revendications précédentes dans laquelle les polygones sont des triangles.

4. Procédé selon une des revendications précédentes comprenant, dans les étapes de prétraitement, une étape de génération d'une grille à maille régulière sur la carte origine et de création d'une base de données associant chaque maille de la grille aux polygones qui interceptent ou sont contenus dans cette maille, et lors de l'étape de transformation, une étape de détermination de la maille relative à la position sélectionnée en (f) dans la carte d'origine pour extraire les polygones pouvant contenir la position sélectionnée en (f).

5. Procédé selon la revendication 4 où la détermination du polygone de la carte origine dans lequel se trouve la dite position sélectionnée en (f) se fait parmi les polygones extraits.

6. Procédé selon une des revendications précédentes où l'étape (f) comprend la détermination des coordonnées de la dite position par un système de positionnement par satellite.

7. Procédé selon une des revendications précédentes en ce que la carte origine est la carte topographique et où l'étape (f) comprend la détermination d'une position GPS.

8. Procédé selon une des revendications 1 à 5 en ce que la carte origine est la carte illustrative et que l'étape (f) comprend la sélection de la position d'un élément d'intérêt sur la dite carte illustrative.

9. Procédé selon une des revendications précédentes où l'étape (i) est réalisée à l'aide d'une méthode d'interpolation tri-linéaire.

10. Dispositif de repérage géographique comprenant les éléments suivants :
- une unité centrale ;
- un système de géolocalisation définissant une position topographique;
- un élément de mémoire permettant de contenir une carte illustrative d'une zone géographique;
- des moyens d'affichage ;
**caractérisé en ce que**, ce dispositif comprend :
- un élément de mémoire permettant de contenir une base de données contenant un ensemble de paires de polygones, l'un des polygones de la paire étant nommé polygone d'origine et étant associé à une carte dite carte d'origine et l'autre polygone de la paire étant nommé polygone destination et étant associé à une carte dite carte destination, chaque polygone d'origine étant associé à un polygone destination, lesdits polygones ayant pour sommets, des points de repères contenus dans la carte correspondante, de sorte que les mêmes points de repères formant les sommets des polygones origine forment les sommets des polygones destination correspondants, étant entendu que la carte origine et la carte destination sont sélectionnées entre une carte illustrative et une carte topographique et que lorsque la carte origine est une carte illustrative, la carte destination est une carte topographique et vice versa,
- des moyens de déterminer une position dans la carte origine,
- des moyens pour déterminer le polygone origine contenant la position dans la carte origine,
- des moyens de transformation pour déterminer le polygone destination correspondant,
- des moyens pour déterminer la position à l'intérieur du polygone destination par détermination des distances relatives entre la position dans la carte origine et les sommets du polygone origine.

11. Dispositif selon la revendication 10 **caractérisé en ce que** les moyens de détermination de la position dans la carte origine est un récepteur GPS et **en ce que** les moyens d'affichage permettent d'afficher la position du récepteur GPS sur la carte illustrative.

12. Dispositif selon la revendication 10 ou 11 **caractérisé en ce qu'**au moins un élément de mémoire permet de stocker une base de données contenant une association de données où chaque maille d'une grille à maille régulière sur la carte origine est associée aux polygones origine qui sont contenus ou interceptent cette maille.

13. Dispositif selon une des revendications de 10 à 12 **caractérisé en ce que** le dispositif comprend de surcroît au moins un des éléments sélectionnées parmi des moyens de connexion internet, des moyens de connexion à une base de donnée cartographique, des moyens d'impression pour imprimer la position d'un élément d'intérêt particulier sur une carte destination, des moyens de transmission d'information, des moyens de connexion à un ordinateur ou à une unité de calcul et un boîtier dans lequel se trouve au moins certains de ces éléments.

14. Dispositif selon une des revendications de 10 à 13 **caractérisé en ce que** le dispositif est sélectionné parmi un ordinateur, un organiseur, un agenda électronique, un assistant digital personnel et un téléphone portable.

15. Utilisation d'un dispositif selon l'une des revendications 10 à 14 dans un procédé de repérage géographique selon l'une des revendications 1 à 9.

## Claims

1. Process for precise geographic tracking on an illustrative map comprising the following steps:
(1) Pre-treatment of the reference geographic data comprising the following steps:
(a) Selection of an origin map and of a destination map of the geographical area of interest;
(b) Selection of common tracking points on said origin map and on said destination map;
(c) Generation of a «meshing» on the origin map by generation of polygons which do not overlap and where the vertices correspond to common tracking points selected in (b) and determination of the coordinates of each polygon in the system of coordinates of the origin map;
(d) Tracking on the destination map of the «meshing» generated in (c) by plotting the polygons on the destination map, using the same tracking points as vertices of the polygons and determination of the coordinates of each polygon in the system of coordinates of the destination map;
(e) Storage of each polygon generated in the system of coordinates of the origin map as well as of its corresponding polygon in the system of coordinates of the destination map;
(2) Transformation of the coordinates of a position in the origin map into the coordinates of the destination map comprising the following steps:
(f) determination of a position on the origin map selected in (a);
(g) determination of the polygon of the origin map in which said position selected in (f) is found amongst the polygons generated in (c) and determination of the relative distances between the selected position and the vertices of that polygon.
(h) determination on the destination map of the polygon corresponding to the polygon determined in (g);
(i) determination by interpolation of the coordinates of the position selected in (f) in the system of coordinates of the destination map on the basis of the relative distances determined in (g) and the vertices of the polygon determined in (h);
it being understood that the origin map and the destination map are selected between an illustrative map and a topographic map and that when the origin map is an illustrative map, the destination map is a topographic map and vice versa.

2. Process according to claim 1, wherein step (b) is carried out in such a way that the most numerous points are situated in the area of interest.

3. Process according to one of the previous claims, wherein the polygons are triangles.

4. Process according to one of the previous claims comprising, in the pre-treatment steps, a step of generation of a regular mesh grid on the origin map and of creation of a database associating each mesh of the grid with the polygons which intercept or are contained in that mesh, and at the time of the transformation step, a determination step of the mesh relative to the position selected in (f) on the origin map for extraction of the polygons able to contain the position selected in (f).

5. Process according to claim 4, wherein the determination of the polygon of the origin map in which said position selected in (f) is found, is done amongst the extracted polygons.

6. Process according to one of the previous claims, wherein step (f) comprises the determination of the coordinates of said position by a satellite positioning system.

7. Process according to one of the previous claims, wherein the origin map is the topographic map and wherein step (f) comprises the determination of a GPS position.

8. Process according to one of the claims 1 to 5, wherein the origin map is the illustrative map and wherein step (f) comprises the selection of the position of an element of interest on said illustrative map.

9. Process according to one of the previous claims, wherein step (i) is performed by means of a trilinear interpolation method.

10. Device for geographic tracking comprising the following elements:
- a central unit;
- a geo-localization system defining a topographic position;
- a storage element allowing to contain an illustrative map of a geographical area;
- display means;
**characterised in that** said device comprises:
- a storage element allowing to contain a database containing a collection of polygon pairs, associating each origin polygon with a destination polygon in such a way that the same tracking points that form the vertices of the origin polygons form the corresponding destination polygon vertices, it being understood that the origin map and the destination map are selected between an illustrative map and a topographic map and that when the origin map is an illustrative map, the destination map is a topographic map and vice versa,
- means for determining a position on the origin map,
- means for determining the origin polygon containing the position on the origin map,
- transformation means for determining the corresponding destination polygon,
- means for determining the position inside the destination polygon by determination of the relative distances between the position on the origin map and the vertices of the origin polygon.

11. Device according to claim 10, **characterised in that** the means for determining the position on the origin map is a GPS receiver and **in that** the display means allow the display of the position of the GPS receiver on the illustrative map.

12. Device according to claim 10 or 11, **characterised in that** at least one storage element allows the storage of a database containing a combination of data where each mesh of a regular mesh grid on the origin map is associated with the origin polygons which are contained or intercept this mesh.

13. Device according to one of the claims 10 to 12, **characterised in that** the device additionally comprises at least one of the elements selected among Internet connection means, means of connection to a cartographic database, printing means for printing the position of a particular element of interest on a destination map, information transmission means, connection means to a computer or to a calculation unit and a housing in which at least some of these elements are found.

14. Device according to one of the claims 10 to 13, **characterised in that** the device is selected among a computer, an organizer, an electronic agenda, a personal digital assistant and a mobile phone.

15. Use of a device according to one of the claims 10 to 14 in a process of geographic tracking.

## Patentansprüche

1. Präzises geographisches Kennzeichnungsverfahren auf einer illustrativen Karte, folgende Etappen umfassend:
(1) Vorbehandlung geographischer Bezugsdaten, folgende Etappen umfassend:
(a) Auswahl einer Ursprungskarte und einer Bestimmungskarte der geographischen Wahlzone;
(b) Auswahl gemeinsamer Orientierungspunkte der besagten Ursprungskarte und der besagten Bestimmungskarte;
(c) Erzeugung eines «Maschenwerks» auf der Ursprungskarte durch Erzeugung von Vielecken, die nicht deckungsgleich sind und deren Spitzen den Orientierungspunkten entsprechen, die in (b) ausgewählt wurden und Bestimmung der Koordinate eines jeden Vielecks im Koordinatensystem der Ursprungskarte;
(d) Übertrag auf die Bestimmungskarte des in (c) erzeugten «Maschenwerks» durch Übertrag auf die Bestimmungskarte der Vielecke, unter Benutzung derselben Orientierungspunkte wie die Spitzen der Vielecke und Bestimmung der Koordinate eines jeden Vielecks in dem Koordinatensystem der Bestimmungskarte;
(e) Speicherung eines jeden in dem Koordinatensystem der Ursprungskarte erzeugten Vielecks sowie von dessen entsprechenden Vielecks in dem Koordinatensystem der Bestimmungskarte;
(2) Umwandlung der Koordinate einer Lage der Ursprungskarte in die Koordinate der Bestimmungskarte, folgende Etappen umfassend:
(f) Bestimmung einer Lage auf der in (a) ausgewählten Ursprungskarte;
(g) Bestimmung des Vielecks der Ursprungskarte, in dem sich besagte in (f) ausgewählte Lage unter den in (c) erzeugten Vielecken befindet und Bestimmung der relativen Entfernungen unter der ausgewählten Lage und den Spitzen dieses Vielecks.
(h) Bestimmung auf der Bestimmungskarte des Vielecks, das dem in (g) bestimmten Vieleck entspricht;
(i) Bestimmung der Koordinate der in (f) ausgewählten Lage durch Interpolation in dem Koordinatensystem der Bestimmungskarte auf der Basis der in (g) bestimmten relativen Entfernungen und der in (h) bestimmten Spitzen des Vielecks;
wobei davon auszugehen ist, dass die Ursprungskarte und die Bestimmungskarte zwischen einer illustrativen Karte und einer topographische Karte ausgewählt werden und dass die Bestimmungskarte, wenn die Ursprungskarte eine illustrative Karte ist, eine topographische Karte ist und umgekehrt.

2. Verfahren nach Anspruch 1, in welchem die Etappe (b) so verläuft, dass die meisten Punkte in der interessierten Zone liegen.

3. Verfahren nach einem der vorangehenden Ansprüche, in welchem die Vielecke Dreiecke sind.

4. Verfahren nach einem der vorangehenden Ansprüche, das in den Vorbehandlungsphasen eine Etappe zur Erstellung eines Gitters von regelmäßigen Maschen auf der Ursprungs- und Generierungskarte einer Datenbank umfasst, wobei jede Masche des Gitters den Vielecken zugeordnet wird, die diese Masche abfangen oder in dieser enthalten sind, und bei der Umwandlungsetappe, eine Etappe umfassend zur Bestimmung der Masche, die die Lage betrifft, die in (f) in der Ursprungskarte ausgewählt wurde, um die Vielecke zu entnehmen, die die in (f) ausgewählte Lage enthalten können.

5. Verfahren nach Anspruch 4, in welchem das Vieleck der Ursprungskarte, in der sich die genannte in (f) ausgewählte Lage befindet, unter den ausgezogenen Vielecken bestimmt wird.

6. Verfahren nach einem der vorangehenden Ansprüche, in welchem die Etappe (f) die Bestimmung der Koordinate der genannten Lage durch ein Satellitenpositionierungssystem umfasst.

7. Verfahren nach einem der vorangehenden Ansprüche, **dadurch gekennzeichnet, dass** die Ursprungskarte die topographische Karte ist und worin die Etappe (f) die Bestimmung einer Lage des GPS (Globales Positionierungs-System) umfasst.

8. Verfahren nach einem der Ansprüche 1 bis 5, **dadurch gekennzeichnet, dass** die Ursprungskarte die illustrative Karte ist und dass die Etappe (f) die Auswahl der Lage eines interessierten Elements auf der genannten illustrativen Karte umfasst.

9. Verfahren nach einem der vorangehenden Ansprüche, bei welchem die Etappe (i) mit Hilfe einer dreilinigen Interpolationsmethode verwirklicht wird.

10. Geographische Kennzeichnungsvorrichtung mit folgenden Elementen:
- eine zentrale Einheit;
- ein Geolokalisationssystem, das eine topographische Lage definiert;
- ein Speicherelement, das erlaubt, eine illustrative Karte einer geographischem Zone zu enthalten;
- Anzeigemittel;
**gekennzeichnet dadurch, dass** diese Vorrichtung folgendes umfasst:
- ein Speicherelement, das erlaubt, eine Datenbank zu enthalten, die eine Einheit von Vieleckpaaren enthält, die jedes Ursprungsvieleck einem Bestimmungsvieleck so zuordnet, dass dieselben Orientierungspunkte, die die Spitzen der Ursprungsvielecke bilden, die Spitzen der entsprechenden Bestimmungsvielecke bilden, dabei ist davon auszugehen, dass die Ursprungskarte und die Bestimmungskarte unter einer illustrativen Karte und einer topographischen Karte ausgewählt wurden und dass, wenn die Ursprungskarte eine illustrative Karte ist, die Bestimmungskarte eine topographische Karte ist und umgekehrt,
- Mittel zur Bestimmung einer Lage in der Ursprungskarte,
- Mittel zur Bestimmung des Ursprungsvielecks, das die Lage in der Ursprungskarte enthält,
- Umwandlungsmittel, um das entsprechende Bestimmungsvieleck zu bestimmen,
- Mittel, um die Lage im Inneren des Bestimmungsvielecks durch Ermittlung der relativen Entfernungen zwischen der Lage in der Ursprungskarte und den Spitzen des Ursprungsvielecks zu bestimmen.

11. Vorrichtung nach Anspruch 10, **gekennzeichnet dadurch, dass** die Mittel zur Bestimmung der Lage in der Ursprungskarte ein GPS-Empfänger ist, sowie **dadurch**, dass die Anzeigemittel die Anzeige der Lage des GPS-Empfängers auf der illustrativen Karte gestatten.

12. Vorrichtung nach Anspruch 10 oder 11, **gekennzeichnet dadurch, dass** mindestens ein Speicherelement es gestattet, eine Datenbank zu speichern, die eine Vereinigung von Daten enthält, worin jede Masche eines Gitters von regelmäßigen Maschen auf der Ursprungskarte den Ursprungsvielecken zugeordnet ist, die in dieser Masche enthalten sind oder diese Masche abfangen.

13. Vorrichtung nach einem der Ansprüche 10 bis 12, **gekennzeichnet dadurch, dass** die Vorrichtung zusätzlich mindestens eines der Elemente umfasst, das ausgewählt wurde unter Internet-Anschlussmitteln, Anschlussmitteln an eine kartographische Datenbank, Druckvorrichtungen zum Ausdrucken der Lage eines Elements von besonderem Interesse auf einer Bestimmungskarte, Informations-Übertragungsmittel, Anschlussmittel an einen Computer oder an eine Rechnereinheit und ein Gehäuse, in dem sich mindestens einige dieser Elemente befinden.

14. Vorrichtung nach einem der Ansprüche 10 bis 13, **gekennzeichnet dadurch, dass** die Vorrichtung unter einem Computer, einem Organizer, einem elektronischen Notizbuch, einem persönlichen digitalen Assistenten und einem Handy ausgewählt wurde.

15. Benutzung einer Vorrichtung nach einem der Ansprüche 10 bis 14 in einem geographischen Kennzeichnungsverfahren.
